# EUROPEAN PATENT APPLICATION

(11) **EP 2 762 837 A2**
(43) Date of publication of application: **06.08.2014**
(21) Application number: 14151509.8
(22) Date of filing: 16.01.2014
(51) Int. Cl.: G01C 23/00

(54) **System and method for displaying terrain altitudes on an aircraft display**

(30) Priority: 04.02.2013 US 201313758040
(71) Applicant: Honeywell International Inc., Morristown, NJ 07962-2245 (US)
(72) Inventor: Burgin, Roger W., Morristown, NJ New Jersey 07962-2245 (US); Malviya, Pramod Kumar, Morristown, NJ New Jersey 07962-2245 (US); Pepitone, Dave, Morristown, NJ New Jersey 07962-2245 (US)
(74) Representative: Houghton, Mark Phillip

(57) **Abstract**

A system and method are provided for displaying terrain altitudes on an aircraft display that are easily understood by the pilot. A plurality of bands are defined, wherein each band defines a range of altitudes of terrain in the vicinity of the aircraft. A list of altitudes representing each band is displayed in a legend. A band is highlighted when a number associated therewith is selected, and a number is highlighted when the band associated therewith is selected. The band or number may be selected, for example, by cursor, or the band may be selected by position of the aircraft.

## Description

### TECHNICAL FIELD

The exemplary embodiments described herein generally relate to graphic displays and more particularly to graphic map displays in aircraft cockpits.

### BACKGROUND

Modem map displays, particularly those used in aircraft for flight planning and monitoring, are capable of displaying a considerable amount of information such as terrain information and flight planning information. The terrain information may include situational awareness terrain and cautions that identify potential hazards. Flight planning information may include, for example, flight path and altitude information useful to the pilot.

These electronic instrumentation displays continue to advance in sophistication, achieving increasingly higher levels of information density and, consequently, presenting a greater amount of visual information to be perceived and understood by the operator, e.g., the pilot. It is important that visual displays provide a proper cognitive mapping between what the operator is trying to achieve and the information available to accomplish the task.

It is important for pilots to know the position of the aircraft which they are operating (referred to herein as their "own-ship") and the height of the surrounding terrain. Airport Moving Maps (AMM) are an overlay, for example, on a multi-function display/inertial navigation display (MFD/INAV), where terrain features like elevation are shown on the display. Depiction of the own-ship position reference point is extremely important.

Data driven charts (DDC) have a powerful ability to integrate chart information with aircraft position and flight management system (FMS) procedural routing. Although terrain layers can be overlaid on the DDC information and FMS routing, current terrain lacks precision and crispness. Aeronautical charts have the ability to display terrain represented by topographical contour lines of the different elevations between contours. The altitude of each level of terrain is written on the lines. This is a very crisp and concise way of presenting terrain information especially around an airport terminal area.

However, the resolution of the display on known moving maps restricts the labeling of topographical lines because of clutter. Also, on known maps, color differentiation may be difficult to visually determine what color goes with what altitude elevation. Further, it is difficult for the pilot to differentiate precise terrain elevations without contour lines.

Accordingly, it is desirable to provide a system and method for displaying terrain altitudes that are easily understood by the pilot. Furthermore, other desirable features and characteristics of the exemplary embodiments will become apparent from the subsequent detailed description and the appended claims, taken in conjunction with the accompanying drawings and the foregoing technical field and background.

### BRIEF SUMMARY

A system and method displays terrain altitudes to the pilot or aircrew of an aircraft to precisely locate altitudes on the map.

In an exemplary embodiment, a display system for displaying terrain altitudes within an aircraft comprises a system configured to determine a location of the aircraft and altitude data of the terrain in the vicinity of the aircraft; a processor coupled to the system and configured to define a plurality of bands, wherein each band comprises a range of altitudes of the terrain void of a number defining an altitude; and create a list of numbers of altitudes representative if each band; and a display coupled to the processor and configured to display the bands and the list, wherein each band is displayed in a different format and each of the numbers in the list are displayed in the format of the band for which it represents.

In another exemplary embodiment, a method of displaying terrain altitudes on a display within an aircraft, the method comprising defining a plurality of bands, wherein each band comprises a range of altitudes of the terrain in the vicinity of the aircraft and wherein each band is void of a number representative of the altitude; creating a list of numbers of altitudes representing each band; and displaying the bands and the list on a moving map, wherein each band is displayed in a unique format or color and each of the numbers in the list are in the format of the band for which it represents.

In yet another exemplary embodiment, a method of displaying terrain altitudes on a display within an aircraft, the method comprising defining a plurality of bands, wherein each band comprises a range of altitudes of the terrain in the vicinity of the aircraft and wherein each band is void of a number representative of the altitude; creating a list of numbers of altitudes representing each band; and displaying the bands and the list on a moving map, wherein each band is displayed in a unique format or color and each of the numbers in the list are in the format of the band for which it represents; selecting the band or the number by position a cursor thereover or when an icon representing the location of the aircraft is positioned over the band; highlighting the band when the number from the list representing that band is selected; highlighting the number when the band associated therewith is selected; and displaying an icon representing the aircraft at the current altitude in the list.

### BRIEF DESCRIPTION OF THE DRAWINGS

The present invention will hereinafter be described in conjunction with the following drawing figures, wherein like numerals denote like elements, and
FIG. 1 is a functional block diagram of a known flight display system;
FIG. 2 is a graphic display of mapped altitudes and a legend of the altitudes in accordance with a first exemplary embodiment;
FIG. 3 is a graphic display of mapped altitudes and a legend of the altitudes in accordance with a second exemplary embodiment;
FIG. 4 is a graphic display of mapped altitudes and a legend of the altitudes in accordance with a third exemplary embodiment;
FIG. 5 is a graphic display of mapped altitudes and a legend of the altitudes in accordance with a fourth exemplary embodiment;
FIG. 6 is a graphic display of mapped altitudes and a legend of the altitudes in accordance with a fifth exemplary embodiment;
FIG. 7 is a graphic display of mapped altitudes and a legend of the altitudes in accordance with a seventh exemplary embodiment;
FIG. 8 is a flow chart of a method in accordance with the first exemplary embodiment; and
FIG. 9 is a flow chart of yet another method in accordance with the exemplary embodiments.

### DETAILED DESCRIPTION

The following detailed description is merely illustrative in nature and is not intended to limit the embodiments of the subject matter or the application and uses of such embodiments. Any implementation described herein as exemplary is not necessarily to be construed as preferred or advantageous over other implementations. Furthermore, there is no intention to be bound by any expressed or implied theory presented in the preceding technical field, background, brief summary, or the following detailed description.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, softwasre, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

For the sake of brevity, conventional techniques related to graphics and image processing, navigation, flight planning, aircraft controls, aircraft data communication systems, and other functional aspects of certain systems and subsystems (and the individual operating components thereof) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

The mapping methods described herein may be used with a variety of aircraft, such as planes and helicopters. The aviation environment is described herein as the exemplary embodiment and may include navigation from point to point or approach and landing at an airport. Generally a top view display is presented in conjunction with the vertical view presented herein. Various types of maps may be used for display on the top view, for example, road maps, terrain maps, aviation maps, and topographical maps.

Some applications may require more than one monitor, for example, a head down display screen, to accomplish the mission. These monitors may include a two dimensional moving map display and a three dimensional perspective display. A moving map display may include a top-down view of the aircraft, the flight plan, and the surrounding environment. Various symbols are utilized to denote navigational cues (e.g., waypoint symbols, line segments interconnecting the waypoint symbols, range rings) and nearby environmental features (e.g., terrain, weather conditions, political boundaries, etc).

Alternate embodiments of the present invention to those described below may utilize whatever navigation system signals are available, for example a ground based navigational system, a GPS navigation aid, a flight management system, and an inertial navigation system, to dynamically calibrate and determine a precise course.

In accordance with the exemplary embodiments, a moving map displays the terrain in the vicinity of the aircraft. The terrain is depicted as a plurality of altitude ranges separated by contour lines, with each range displayed in a different format, for example, a different color. A legend, or list, is also displayed, preferably on a side or in a corner of the display, and includes a number representing each range of altitude or contour line. For example, the number 5000 may represent the range bounded by a maximum of 5000 feet. All terrain elevations and aircraft altitudes are preferably shown as feet above mean sea level (MSL). In one exemplary embodiment, the pilot may select one of the terrain range or the representative number from the legend, causing the other or both the terrain in that range and the number to be highlighted, for example, increasing brightness. This selection quickly illustrates to the pilot his altitude in comparison to the terrain on moving map, and, for example, aids the pilot in deciding to climb or turn to avoid terrain. The selection of the terrain range or the representative number may be made in any one of a plurality of ways known in the computer technology; however, the preferred method would be by a moving curser. In another exemplary embodiment, the selection and highlighting may be automatic by the system sensing the movement of the aircraft (own-ship) over the terrain range.

In yet another exemplary embodiment, an aircraft icon may be displayed in the legend at the present altitude of the aircraft. For example, if the legend includes the numbers 5000 and 6000, and the aircraft is flying at 5500 feet, an aircraft icon would be displayed halfway between the numbers 5000 and 6000 in the legend. Furthermore, the present altitude of 5250 feet may also be displayed adjacent, or inside, the aircraft icon in the legend.

In still another exemplary embodiment, the pilot may be advised of the situational awareness by displaying terrain ranges above the altitude of the aircraft in a special format, for example, a red color.

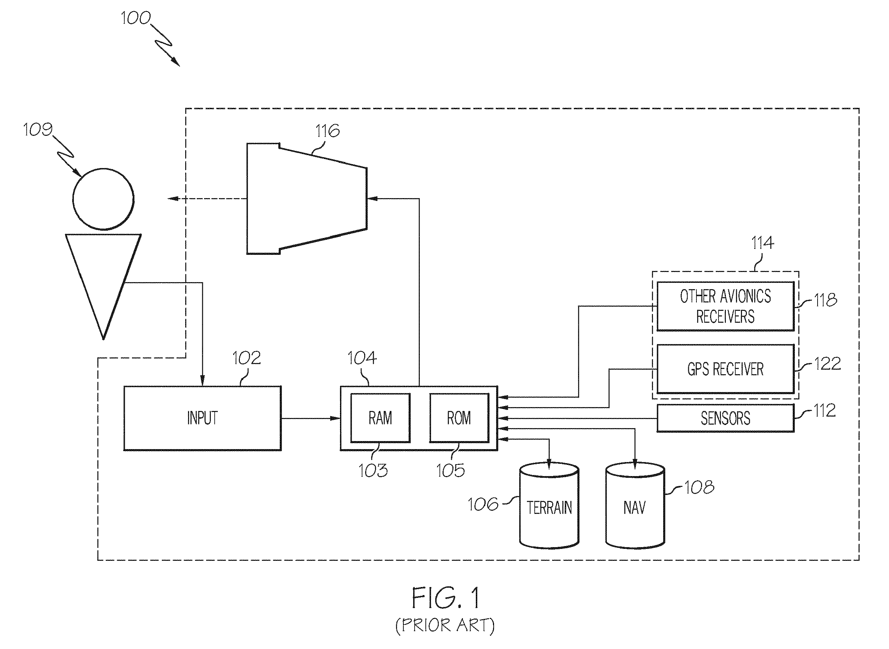

Referring to FIG. 1, an exemplary flight deck display system 100 is depicted and will be described for implementing the present invention. The system 100 includes a user interface 102, a processor 104, one or more terrain/airport databases 106, one or more navigation databases 108, various optional sensors 112 (for the cockpit display version), various external data sources 114, and a display device 116. In some embodiments the user interface 102 and the display device 116 may be combined in the same device, for example, a touch pad. The user interface 102 is in operable communication with the processor 104 and is configured to receive input from a user 109 (e.g., a pilot) and, in response to the user input, supply command signals to the processor 104. The user interface 102 may be any one, or combination, of various known user interface devices including, but not limited to, a cursor control device (not shown), such as a mouse, a trackball, or joystick, and/or a keyboard, one or more buttons, switches, or knobs.

The processor 104 may be any one of numerous known general-purpose microprocessors or an application specific processor that operates in response to program instructions. In the depicted embodiment, the processor 104 includes on-board RAM (random access memory) 103, and on-board ROM (read only memory) 105. The program instructions that control the processor 104 may be stored in either or both the RAM 103 and the ROM 105. For example, the operating system software may be stored in the ROM 105, whereas various operating mode software routines and various operational parameters may be stored in the RAM 103. It will be appreciated that this is merely exemplary of one scheme for storing operating system software and software routines, and that various other storage schemes may be implemented. It will also be appreciated that the processor 104 may be implemented using various other circuits, not just a programmable processor. For example, digital logic circuits and analog signal processing circuits could also be used.

No matter how the processor 104 is specifically implemented, it is in operable communication with the terrain/taxiway databases 106, the navigation databases 108, and the display device 116, and is coupled to receive various types of aircraft state data from the various sensors 112, and various other environment related data from the external data sources 114. The processor 104 is configured, in response to the inertial data and the avionics-related data, to selectively retrieve terrain data from one or more of the terrain/airport databases 106 and navigation data from one or more of the navigation databases 108, and to supply appropriate display commands to the display device 116. The display device 116, in response to the display commands from, for example, a touch screen, keypad, cursor control, line select, concentric knobs, voice control, and datalink message, selectively renders various types of textual, graphic, and/or iconic information. The preferred manner in which the textual, graphic, and/or iconic information are rendered by the display device 116 will be described in more detail further below. Before doing so, however, a brief description of the databases 106, 108, the sensors 112, and the external data sources 114, at least in the depicted embodiment, will be provided.

The memory 103, 105 may be realized as RAM memory, flash memory, EPROM memory, EEPROM memory, registers, a hard disk, a removable disk, a CD-ROM, or any other form of storage medium known in the art. In this regard, the memory 103, 105 can be coupled to the processor 104 such that the processor 104 can be read information from, and write information to, the memory 103, 105. In another embodiment, the memory 103, 105 may be integral to the processor 104 as shown. As an example, the processor 104 and the memory 103, 105 may reside in an ASIC. In practice, a functional or logical module/component of the display system 116 might be realized using program code that is maintained in the memory 103, 105. Moreover, the memory 103, 105 can be used to store data utilized to support the operation of the display system 116, as will become apparent from the following description.

The terrain/taxiway databases 106 include various types of data representative of the surface over which the aircraft is taxing, the terrain over which the aircraft is flying, and the navigation databases 108 include various types of navigation-related data. These navigation-related data include various flight plan related data such as, for example, waypoints, distances between waypoints, headings between waypoints, data related to different airports, navigational aids, obstructions, special use airspace, political boundaries, communication frequencies, and aircraft approach information. It will be appreciated that, although the terrain/taxiway databases 106 and the navigation databases 108 are, for clarity and convenience, shown as being stored separate from the processor 104, all or portions of either or both of these databases 106, 108 could be loaded into the RAM 103, or integrally formed as part of the processor 104, and/or RAM 103, and/or ROM 105. The terrain/taxiway databases 106 and navigation databases 108 could also be part of a device or system that is physically separate from the system 100.

The sensors 112 may be implemented using various types of sensors, systems, and or subsystems, now known or developed in the future, for supplying various types of aircraft state data. The state data may also vary, but preferably include data representative of the geographic position of the aircraft and also other data such as, for example, aircraft speed, heading, altitude, and attitude.

The number and type of external data sources 114 (or subsystems) may also vary, but typically include for example, a GPS receiver 122 and other avionics receivers 118,. The other avionics receivers would include, for example, a terrain avoidance and warning system (TAWS), a traffic and collision avoidance system (TCAS), a runway awareness and advisory system (RAAS), a flight director, and a navigation computer.

The GPS receiver 122 is a multi-channel receiver, with each channel tuned to receive one or more of the GPS broadcast signals transmitted by the constellation of GPS satellites (not illustrated) orbiting the earth. Each GPS satellite encircles the earth two times each day, and the orbits are arranged so that at least four satellites are always within line of sight from almost anywhere on the earth. The GPS receiver 122, upon receipt of the GPS broadcast signals from at least three, and preferably four, or more of the GPS satellites, determines the distance between the GPS receiver 122 and the GPS satellites and the position of the GPS satellites. Based on these determinations, the GPS receiver 122, using a technique known as trilateration, determines, for example, aircraft position, groundspeed, and ground track angle. These data may be supplied to the processor 104, which may determine aircraft glide slope deviation therefrom. Preferably, however, the GPS receiver 122 is configured to determine, and supply data representative of, aircraft glide slope deviation to the processor 104.

The display device 116, as noted above, in response to display commands supplied from the processor 104, selectively renders various textual, graphic, and/or iconic information, and thereby supply visual feedback to the user 109. It will be appreciated that the display device 116 may be implemented using any one of numerous known display devices suitable for rendering textual, graphic, and/or iconic information in a format viewable by the user 109. Non-limiting examples of such display devices include various cathode ray tube (CRT) displays, and various flat panel displays such as various types of LCD (liquid crystal display) and TFT (thin film transistor) displays. The display device 116 may additionally be implemented as a panel mounted display, a HUD (head-up display) projection, or any one of numerous known technologies. It is additionally noted that the display device 116 may be configured as any one of numerous types of aircraft flight deck displays. For example, it may be configured as a multi-function display, a horizontal situation indicator, or a vertical situation indicator, just to name a few. In the depicted embodiment, however, the display device 116 is configured as a primary flight display (PFD).

In operation, the display device 116 is also configured to process the current flight status data for the host aircraft. In this regard, the sources of flight status data generate, measure, and/or provide different types of data related to the operational status of the host aircraft, the environment in which the host aircraft is operating, flight parameters, and the like. In practice, the sources of flight status data may be realized using line replaceable units (LRUs), transducers, accelerometers, instruments, sensors, and other well known devices. The data provided by the sources of flight status data may include, without limitation: airspeed data; groundspeed data; altitude data; attitude data, including pitch data and roll data; yaw data; geographic position data, such as GPS data; time/date information; heading information; weather information; flight path data; track data; radar altitude data; geometric altitude data; wind speed data; wind direction data; etc. The display device 116 is suitably designed to process data obtained from the sources of flight status data in the manner described in more detail herein. In particular, the display device 116 can use the flight status data of the host aircraft when rendering the SVS display.

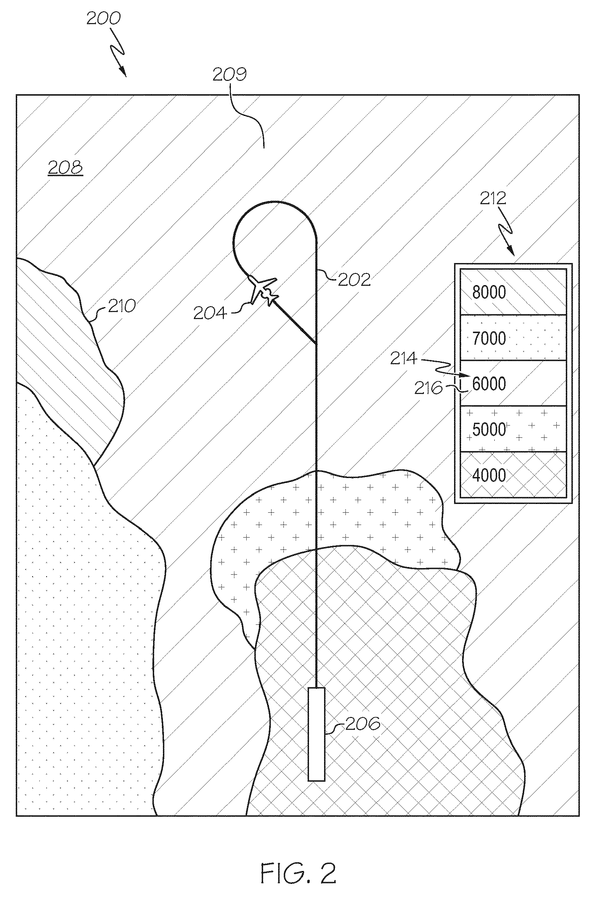

Referring to FIG. 2, a display screen 200 displays a procedure turn 202 for an aircraft 204 landing at an airport 206. Elevation of the terrain 208 in the vicinity of the aircraft 204 is defined by altitude ranges 209 separated by contour lines 210. The contour lines 210 typically represent an easily recognizable altitude of feet or meters, for example, 1000, 2000, and the like. Known altitude maps utilizing contour lines 210 contain the altitude numbers within or adjacent the contour lines 210; however, in many instances this display of the number with the contour lines 210 clutters the display with too much information for the pilot to decipher. The present invention reduces this clutter, yet provides the altitude information in a way that is within the pilot's cognitive ability to decipher.

A legend 212, or list, of numbers 214 representing the altitude of the contour lines 210 is displayed on the display screen 200, preferably on a side or in a corner of the display screen so as to not interfere with the remainder of the information displayed. Each of the numbers 214 are displayed within an area 216. Each of the altitude ranges 209 between contour lines 210 is displayed in a unique format. The unique format may be, for example, different colors, shades, or crosshatching. Likewise, each area 216 within the legend 212 is formatted to match the altitude range for which it is associated. Therefore, a pilot may determine the particular format for the altitude range 209 and refer to the legend for that particular format to determine the altitude. Likewise, the pilot may refer to the legend for an altitude, discern its format, and then determine which altitude range 209 is associated therewith.

While the exemplary embodiments described herein display the procedure turn 202, the invention is applicable to any movement of an aircraft 204 traversing terrain 208 from one point to another.

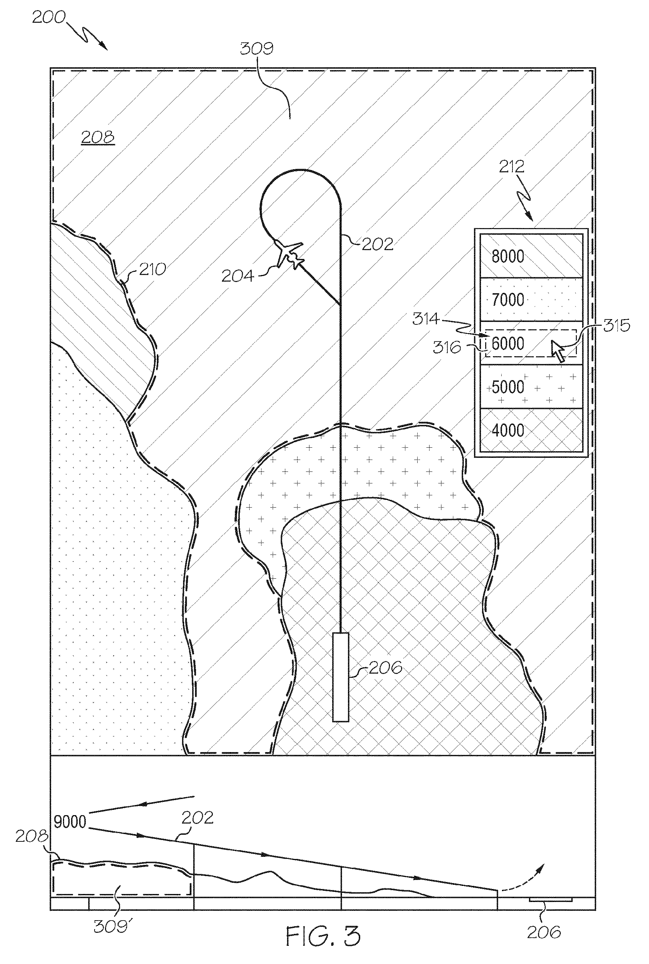

In accordance with one exemplary embodiment (FIG. 3), an altitude number 314 is selected and the altitude range 309 associated therewith, and optionally the altitude number 314, in the map is highlighted. The area 316 in the legend 212 may also be highlighted when selected. By definition, when an area 316 is selected, the number 314 therein is selected. Selection may be accomplished in any number of methods known in the industry; for example, by moving a cursor 315 to the desired location on the screen. Furthermore, a perspective view 201 may be displayed wherein the perspective range 309' is highlighted when the altitude number 314 is selected.

Highlighted means that the selected altitude range 309, area 316, and the altitude number 314 are differentiated from the non-selected altitude ranges 209, areas 216, and numbers 214. The highlighting may, for example, be a changing of color or brightness. The altitude range 309 and area 316 may be selected, for example, by movement of a cursor.

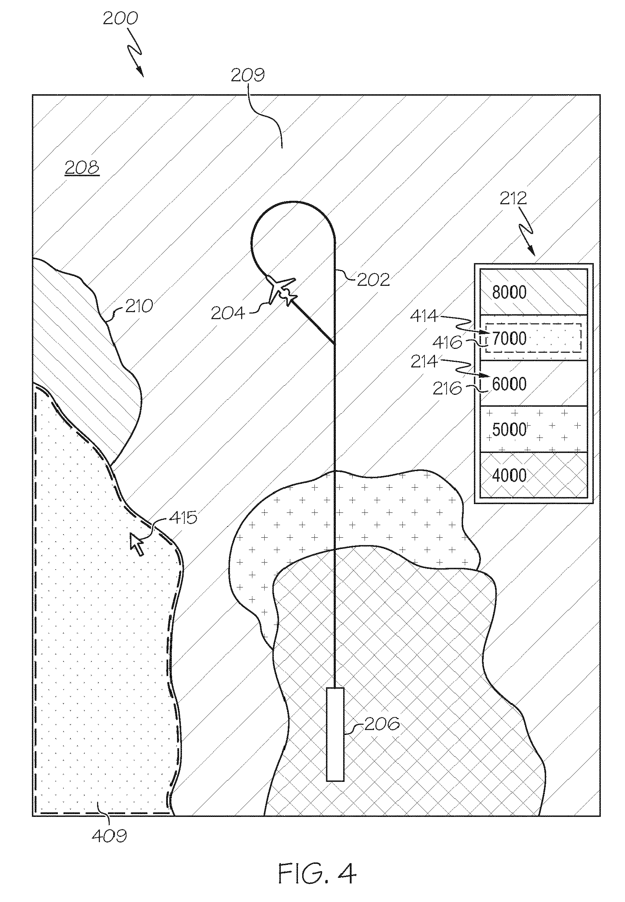

Likewise, in another exemplary embodiment (FIG. 4), an altitude range 409 is selected, for example, by the cursor 415, the area 416 and the altitude number 214 associated with that altitude range 409 are highlighted. The altitude range 409 may also be highlighted when selected.

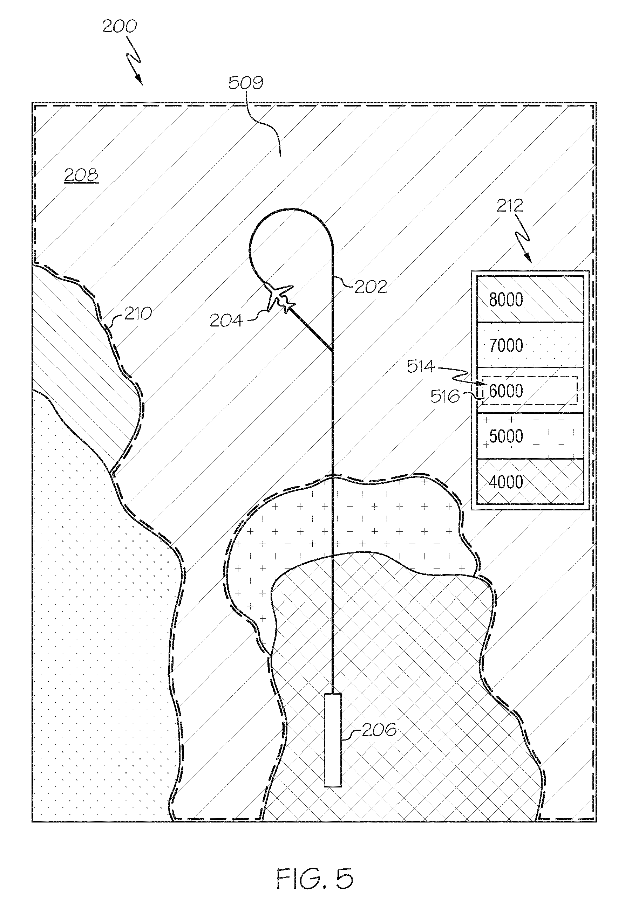

In one exemplary embodiment (FIG. 5), the altitude range 509 may be automatically selected when an icon of the aircraft 204 occupies that altitude range 509, causing the area 516 in the legend 212 to be highlighted.

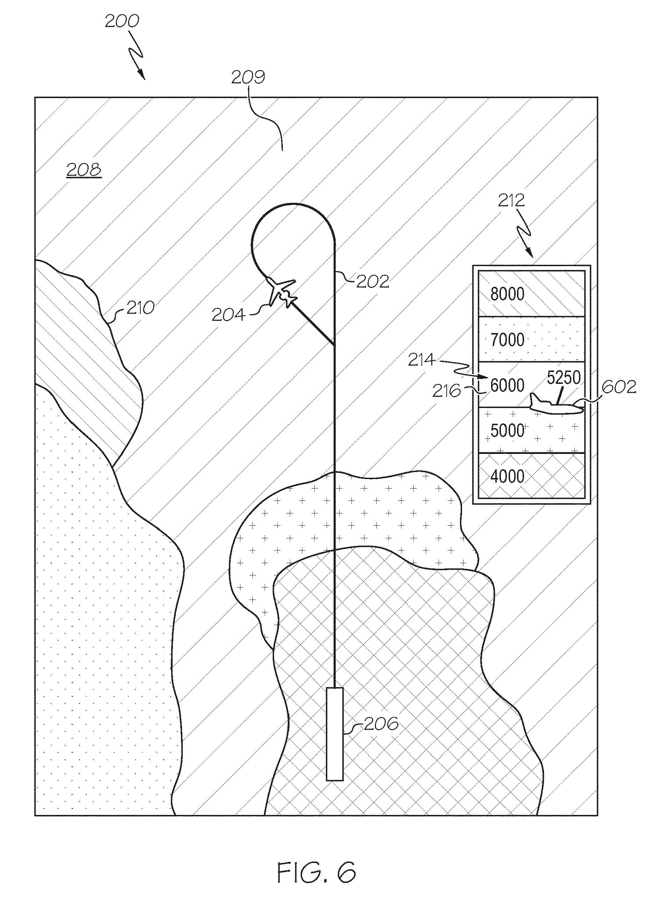

Referring to FIG. 6 for another exemplary embodiment, an aircraft icon 602 is displayed in the legend 202 at the current altitude of the aircraft. Optionally, the actual altitude 5250 of the aircraft is displayed adjacent the aircraft icon 602 in the legend 202.

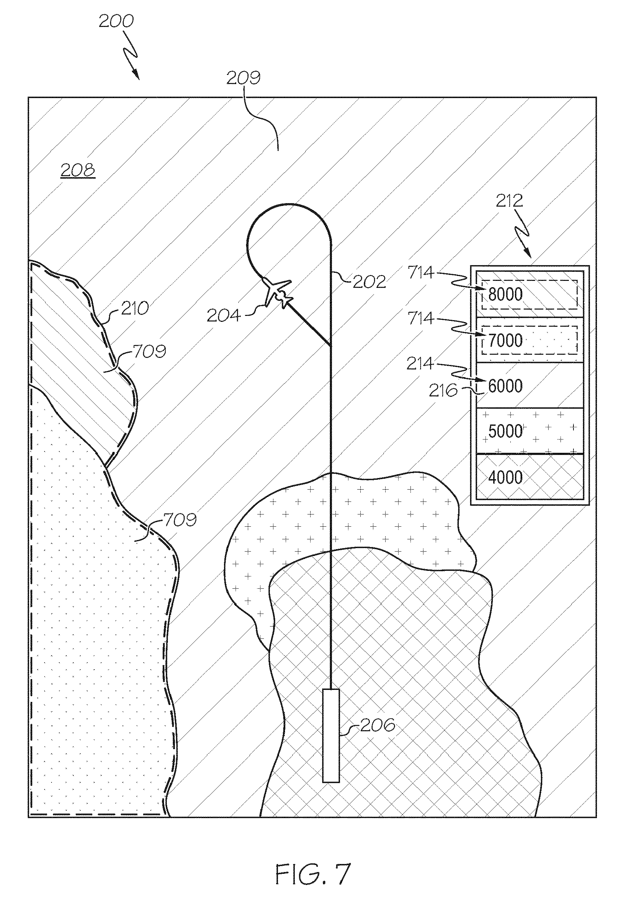

Yet another exemplary embodiment may provide a situational awareness to the pilot (FIG. 7) by highlighting in a unique way that one or more altitude bands 709 and altitude numbers 714 that are above, or present an imminent possibility of the aircraft going below the altitude thereof, the current or planned altitude of the aircraft.

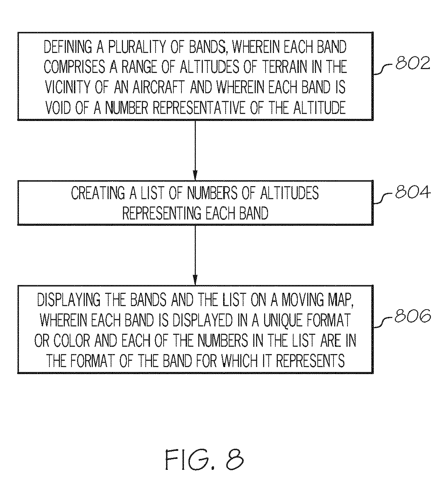

FIG. 8 is a flow chart that illustrates an exemplary embodiment of a method 800 suitable for use with a flight deck display system 100. Method 800 represents one implementation of a method for displaying aircraft terrain on an onboard display of a host aircraft. The various tasks performed in connection with method 800 may be performed by software, hardware, firmware, or any combination thereof. For illustrative purposes, the following description of method 800 may refer to elements mentioned above in connection with preceding FIGS. In practice, portions of method 800 may be performed by different elements of the described system, e.g., a processor, a display element, or a data communication component. It should be appreciated that method 800 may include any number of additional or alternative tasks, the tasks shown in FIG. 8 need not be performed in the illustrated order, and method 800 may be incorporated into a more comprehensive procedure or method having additional functionality not described in detail herein. Moreover, one or more of the tasks shown in FIG. 8 could be omitted from an embodiment of the method 800 as long as the intended overall functionality remains intact.

Referring to FIG. 8, the first exemplary method includes defining 802 a plurality of bands, wherein each band comprises a range of altitudes of terrain in the vicinity of an aircraft and wherein each band is void of a number representative of the altitude, creating 804 a list of numbers of altitudes representing each band, and displaying 806 the bands and the list on a moving map, wherein each band is displayed in a unique format or color and each of the numbers in the list are in the format of the band for which it represents.

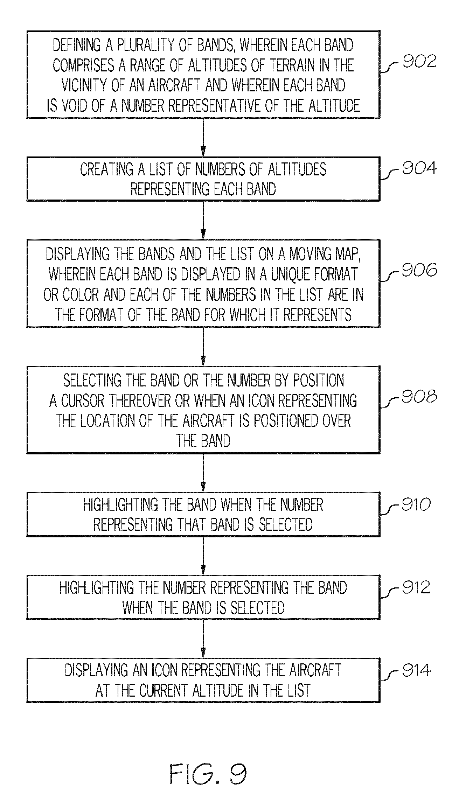

The second exemplary method of FIG. 9 includes defining 902 a plurality of bands, wherein each band comprises a range of altitudes of terrain in the vicinity of an aircraft and wherein each band is void of a number representative of the altitude, creating 904 a list of numbers of altitudes representing each band, displaying 906 the bands and the list on a moving map, wherein each band is displayed in a unique format or color and each of the numbers in the list are in the format of the band for which it represents, selecting 908 the band or the number by position a cursor thereover or when an icon representing the location of the aircraft is positioned over the band, highlighting 910 the band when the number representing that band is selected, highlighting 912 the number representing the band when the band is selected, and displaying 914 an icon representing the aircraft at the current altitude in the list.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

## Claims

1. A display system for displaying terrain altitudes within an aircraft, the display system comprising:
a system configured to determine a location of the aircraft and altitude data of the terrain in the vicinity of the aircraft;
a processor coupled to the system and configured to:
define a plurality of bands, wherein each band comprises a range of altitudes of the terrain void of a number defining an altitude; and
create a list of numbers of altitudes representative if each band; and
a display coupled to the processor and configured to display the bands and the list, wherein each band is displayed in a different format and each of the numbers in the list are displayed in the format of the band for which it represents.

2. The display system of claim 1 wherein the processor is further configured to:
highlight one of the bands when the number associated with that band is selected.

3. The display system of claim 1 wherein the processor is further configured to:
highlight one of the numbers when the band associated with that number is selected.

4. The display system of claim 1 wherein the processor is further configured to:
select the band or the number by movement of a curser.

5. The display system of claim 1 wherein the processor is further configured to:
select the band when a displayed icon representing the aircraft is positioned over the band.

6. The display system of claim 1 wherein each format comprises a unique color.

7. The display system of claim 1 wherein the processor is further configured to:
display an icon representative of the aircraft within the list at the current altitude.

8. The display system of claim 1 wherein the processor is further configured to:
display an icon representative of the aircraft at the current altitude, and the current altitude within or adjacent the icon.

9. The display system of claim 1 wherein the processor is further configured to:
display the band and the representative number for an altitude in a special format when the aircraft goes below that altitude.

10. A method of displaying terrain altitudes on a display within an aircraft, the method comprising:
defining a plurality of bands, wherein each band comprises a range of altitudes of the terrain in the vicinity of the aircraft and wherein each band is void of a number representative of the altitude;
creating a list of numbers of altitudes representing each band; and
displaying the bands and the list on a moving map, wherein each band is displayed in a unique format or color and each of the numbers in the list are in the format of the band for which it represents.

11. The method of claim 10 further comprising:
highlighting one of the bands and the number from the list representing that band when one of the band or the number are selected.

12. The method of claim 10 further comprising:
highlighting one of the bands when the number associated with that band is selected.

13. The method of claim 10 further comprising:
highlighting one of the numbers when the band associated with that number is selected.

14. The method of claim 11 wherein the highlighting comprises selecting the band when a displayed icon representing the aircraft is positioned over the band.

15. The method of claim 10 further comprising displaying an icon representative of the aircraft within the list at the current altitude.
